# FASCICULE DE BREVET EUROPEEN

(11) **EP 3 554 948 B1**
(45) Date de publication et mention de la délivrance du brevet: **03.03.2021**
(21) Numéro de dépôt: 16823345.0
(22) Date de dépôt: 16.12.2016
(51) Int. Cl.: B64F 5/23, B64F 1/24, B64F 1/00

(54) **TERMINAL SECURISE**
SICHERES ENDGERÄT
SECURE TERMINAL

(43) Date de publication de la demande: 23.10.2019
(73) Titulaire: Embassair Group International, 7307 Steinsel (LU)
(72) Inventeur: DEVAUX, Franklin, 21370 Prenois (FR); PETIT, Eric, 94100 Saint Maur des Fosses (FR)
(74) Mandataire: Oudin, Stéphane
(86) Numéro de dépôt international: PCT/IB2016/057718
(87) Numéro de publication internationale: WO 2018/109532

(56) Documents cités:
- EP-B1- 1 812 907
- WO-A2-2011/034992
- GB-A- 567 552
- US-A1- 2006 071 789
- US-B1- 6 335 688

## Description

### Domaine technique

La présente invention se rapporte à un terminal aéroportuaire visant à résoudre le problème de la sécurité des passagers en vue de leur embarquement à bord d'un moyen de transport du type aéronef.

### Technique antérieure

Dans le domaine du transport aérien, les activités terroristes représentent à l'heure actuelle un danger considérable et il apparaît indispensable pour la sécurité des passagers de réussir à interdire l'accès aux moyens de transport et/ou au lieu d'embarquement à toute personne non autorisée et mal intentionnée.

Une réelle demande émerge aujourd'hui de la part des usagers des transports aérien pour accroître le niveau de sécurité lors de l'embarquement et lors du transport lui-même, afin d'éviter une éventuelle baisse de la fréquentation de ce type de transport, ce qui aurait des répercussions financières néfastes considérables sur les compagnies aériennes.

On connaît déjà des systèmes visant à permettre le contrôle individuel d'accès à un aéroport ; c'est le cas par exemple du brevet anglais GB 2 382 907 concernant un système pour le contrôle individuel d'accès à un aéroport comprenant une carte contenant des informations telles que, par exemple, des caractéristiques biométriques pouvant être lues par une machine de contrôle d'accès qui les compare à des informations prises en temps réel chez l'utilisateur afin d'autoriser ou non l'accès à l'utilisateur. La carte d'accès peut comporter par ailleurs, les caractéristiques du statut de l'utilisateur (passager, employé, niveau hiérarchique...) ce qui détermine les lieux dont l'accès est autorisé au sein de l'aéroport.

Néanmoins, la configuration actuelle des lieux d'embarquement dans un moyen de transport, notamment du type avion, est telle que les lieux où un contrôle d'accès est nécessaire sont distants les uns des autres, disséminés au sein même de l'espace global voué à l'embarquement ; cette multiplicité de lieux de contrôle démultiplie en conséquence les risques d'intrusion de personnes non autorisées à y accéder ou qui risqueraient de nuire à la sécurité des intervenants au transport, à savoir les passagers, et du personnel administratif, technique et naviguant.

Un terminal sécurisé de l'art antérieur est divulgué dans le document EP 1 812 907 B1.

### Exposé de l'invention

Le but de la présente invention est de proposer un terminal aéroportuaire sécurisé dont l'infrastructure technique et opérationnelle permet, d'une part, d'assurer un niveau de sécurité maximal pour protéger l'intégrité physique du bâtiment constituant ledit terminal, des aéronefs, des véhicules terrestres, et des passagers et du personnel naviguant, technique et administratif, et, d'autre part, de proposer des zones sécurisées de stationnement et de préparation de l'aéronef en vue de le rendre opérationnel pour un nouveau départ. Par ailleurs, à la sécurité assurée par ladite infrastructure vient également s'ajouter la notion de confidentialité des personnes (passagers, équipages, clients,...), des aéronefs, des véhicules personnels et des mouvements associés à ces 3 catégories.

Conformément à l'invention, il est donc proposé un terminal sécurisé pour le transport aérien de passagers dont l'infrastructure technique et opérationnelle permet d'assurer la sécurité physique du bâtiment, des aéronefs, des biens, des passagers et du personnel naviguant, technique et administratif et la confidentialité des passagers et de leurs biens, ledit terminal sécurisé étant remarquable en ce qu'il comporte au moins un bâtiment ayant une section horizontale en forme globale de V et comportant deux branches s'étendant depuis une zone médiane, constituant des hangars de stationnement pour des aéronefs et déterminant entre elles une zone centrale non couverte, appelée « rampe », agencée pour permettre la manipulation et le stationnement d'aéronefs, la rampe étant physiquement isolée de l'environnement extérieur du terminal sécurisé par une barrière, nommée « bouclier », rejoignant les extrémités libres des branches et transformant alors l'ensemble bâtiment - rampe en une enceinte sécurisée, le bouclier participant également à préserver la confidentialité des mouvements d'embarquement, débarquement et de chargement, déchargement des aéronefs stationnés sur la rampe.

La portion de la rampe disposée à proximité immédiate de la zone médiane est de préférence couverte et constitue la zone d'embarquement susceptible d'accueillir au moins un aéronef et permettant l'embarquement/débarquement des passagers, équipages et clients et le chargement/déchargement des biens et chargements à l'abri des intempéries ou du soleil et surtout à l'abri des regards extérieurs indiscrets.

Ladite portion de la rampe comporte avantageusement une plateforme rotative apte à accueillir un aéronef et à le faire pivoter d'environ 180 degrés pour le positionner cockpit en direction du bouclier. De plus, la façade interne de la zone d'embarquement est renforcée pour résister aux contraintes mécaniques et thermiques engendrées par la poussée desdits réacteurs d'un aéronef.

De manière avantageuse, le terminal sécurisé comporte un dispositif de dégivrage autonome ou semi-autonome permettant le dégivrage et l'application de produits d'antigivrage sur les aéronefs situés sur la rampe afin de les rendre opérationnels pour un nouveau départ, ledit dispositif de dégivrage étant pilotable directement par une main d'œuvre au sol ou directement par le commandant de bord de l'aéronef concerné.

Selon un mode de réalisation préféré, le dispositif de dégivrage est un système suspendu stabilisé composé d'un réservoir distributeur muni d'une ou plusieurs buses, mobile le long d'un câble tendu entre les branches du bâtiment du terminal sécurisé, ledit ensemble réservoir distributeur - câble étant mobile, selon une direction sensiblement perpendiculaire audit câble grâce à deux chariot-enrouleurs aptes chacun à se déplacer le long de l'arête supérieure d'une des façades internes des branches du bâtiment.

Le réservoir-distributeur est de préférence apte à se déplacer verticalement par rapport au câble grâce à un dispositif extensible.

Pour assurer la sécurité, le terminal sécurisé est organisé en zones de différents niveaux de sureté, ces dernières étant au moins les suivantes :
- ZONE HC : zones relatives aux emplacements en dehors du contrôle du terminal sécurisé,
- ZONES SCi : zones relatives aux emplacements externes et/ou internes au terminal sécurisé sous le contrôle dudit terminal sécurisé,
- ZONE FO : zones relatives aux emplacements réservés aux forces de l'ordre et non accessibles aux passagers,
lors du passage d'une zone à une autre, des règles spécifiques de sécurité s'appliqueront en fonction de l'entité qui transite, lesdites règles de sécurité étant mises en œuvre par différents moyens et équipements.

Le terminal sécurisé comporte avantageusement un système de vidéo surveillance en circuit fermé pour permettre une surveillance de l'ensemble des zones SCi, les images produites par ledit système de vidéosurveillance étant stockées sur les serveurs sécurisés dudit système de vidéosurveillance et transmises en temps réel à un poste de commande (PC) sécurité du terminal sécurisé à accès sécurisé et contrôlé, lesdites images transmises au PC étant avec un masquage automatique des visages autres que ceux des employés du terminal sécurisé.

Ledit système de vidéo surveillance comprend de préférence des caméras fixes et des caméras panoramiques, lesdites caméras étant des caméras haute définition et utilisant le protocole Internet pour transmettre de manière chiffrée des images et des signaux de commande vers des serveurs vidéo au travers d'un réseau de communication interne dédié en fibre optique ou analogue.

Le système de vidéosurveillance dispose en outre d'un système de détection de mouvement et de reconnaissance faciale et d'un réseau de caméras thermiques.

De manière préférée, le terminal sécurisé comporte des boucliers de transit paramétrables au niveau du passage d'une zone SCi à une autre, et plusieurs scanners à rayon X utilisés au moins de la manière suivante :
- un scanner dédié aux bagages au départ et placé au niveau de bouclier des arrivées véhicules ;
- un scanner mis à disposition des forces de l'ordre au niveau de l'accès principal aux aéronefs, que ce soit pour les arrivées ou les départs ;
- un scanner dédié aux bagages à main et placé au niveau du bouclier des arrivées piéton ;
- un scanner dédié aux marchandises aussi bien pour les passagers que pour le terminal ;
- un scanner dédié à l'entrée du personnel avec portail de détection métallique.

De plus, le terminal sécurisé comporte avantageusement un système de gestion des containers permettant d'acheminer, dans des containers sécurisés les marchandises et/ou bagages, afin de garantir l'intégrité de leur contenu de leur point de départ à leur point d'arrivée, ces containers sécurisés disposant d'une serrure électronique fonctionnant sur la base de codes à au moins six chiffres devant être saisis sur le clavier du ou des containers, un code de fermeture et un code d'ouverture uniques étant associés à chaque vol d'un aéronef de sorte qu'une fois un container fermé, il ne peut plus être ouvert et, une fois ouvert, il ne peut plus être fermé, sauf demande expresse des autorités.

Le terminal sécurisé est de préférence configuré pour garantir la sécurité liée à son personnel, cette dernière étant assurée par au moins les équipements et procédures suivants :
- une procédure de recrutement spécifique ;
- un sas d'accès pour l'entrée du personnel avec passage systématique au travers de portails de sécurité ;
- une authentification biométrique pour le contrôle des accès aux espaces de travail ;
- une limitation des objets personnels pouvant être présents dans les zones internes au terminal sécurisé ;
- une limitation des moyens de communication avec l'extérieur ;
- un badge unique sécurisé et personnalisé pour chaque salarié nécessaire à tout déplacement dans le terminal sécurisé.

De manière préférée, ledit badge est activé par l'insertion d'une carte à puce unique sécurisée et personnalisée et la saisie par l'employé de son code d'identification personnel, ladite carte à puce ne pouvant être programmée qu'en la présence du directeur des ressources humaines et du directeur de la sécurité du terminal sécurisé et contenant au moins les données chiffrées suivantes :
- les images numérisées du visage (en couleur, en noir et blanc et en infrarouge) de l'employé ;
- les dactylogrammes des doigts des deux mains ;
- l'empreinte veineuse des deux mains ;
- les informations d'identité standards de l'employé : nom, prénom, qualité, durée du contrat de travail au moins.

Enfin, pour assurer la sécurité des aéronefs à partir du moment où ils sont sur la rampe, le terminal sécurisé comporte des moyens de sécurité non intrusifs et ne nécessitant aucun équipement à l'intérieur ou sur l'aéronef, ces moyens de sécurité comportant au moins un dispositif de surveillance vidéo, un dispositif de détection périmétrique et le contrôle des appareils utilisés principalement dans les hangars et sur la rampe.

### Description sommaire des figures

D'autres avantages et caractéristiques ressortiront mieux de la description qui va suivre d'un mode d'exécution d'un terminal sécurisé selon l'invention en référence aux figures annexées sur lesquelles :
- la figure 1 est une vue du dessus extérieure d'un terminal sécurisé selon l'invention ;
- la figure 2 est une vue du dessus en partie intérieure du terminal sécurisé de la figure 1 ;
- la figure 3 est une vue du dessus extérieure d'une variante du terminal sécurisé de la figure 1 ;
- la figure 4 est une vue en perspective du dessus partielle du terminal sécurisé de la figure 1 ;
- la figure 5 est une vue en perspective du dessus partielle du terminal sécurisé de la figure 1 selon un autre point de vue.

### Meilleure manière de réaliser l'invention technique

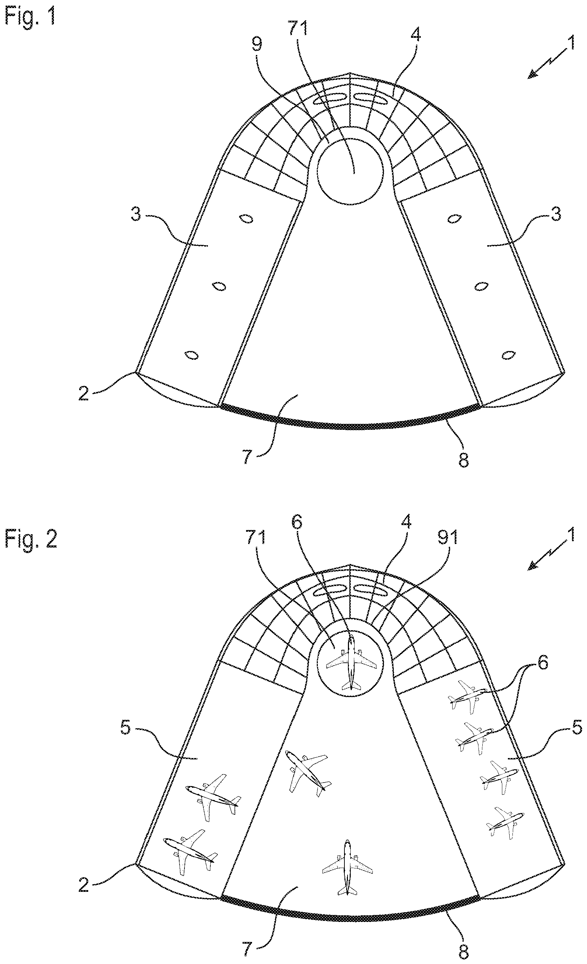

En référence aux figures 1 à 3, l'invention concerne un terminal sécurisé 1 pour le transport aérien de passagers, principalement des hommes d'affaire, dont l'infrastructure technique et opérationnelle permet d'assurer la sécurité physique du bâtiment, des aéronefs, des passagers et du personnel naviguant, technique et administratif.

Ledit terminal sécurisé 1 comprend au moins un bâtiment 2 ayant une section horizontale en forme globale de V et comportant deux branches 3 s'étendant depuis une zone médiane 4.

Chaque branche 3 constitue des hangars 5 de stationnement pour aéronefs 6 permettant de stationner ces derniers après un vol en attendant un nouveau départ ou pour des opérations d'entretien ou de maintenance.

Les deux branches 3 du bâtiment 2 déterminent entre elles une zone centrale 7 non couverte, appelée « rampe », qui permet la manipulation, les opérations et le stationnement d'aéronefs. La rampe 7 est physiquement isolée de l'environnement extérieur du terminal sécurisé 1 par une barrière 8 d'une hauteur significative de plusieurs mètres, nommée « bouclier », rejoignant les extrémités libres des branches 3 et transformant alors l'ensemble bâtiment 2 - rampe 7 en une véritable enceinte sécurisée. Le bouclier 8 participe également à préserver la confidentialité des mouvements d'embarquement, débarquement et de chargement, déchargement des aéronefs stationnés sur la rampe 7.

D'une manière générale, le terme « bouclier » désigne ici une barrière physique ou non devant être franchie par les personnes, équipements ou marchandises/bagages pour passer d'une zone à une autre.

Ladite rampe 7 permet ainsi d'accueillir plusieurs aéronefs 6 soit pour effectuer des opérations d'embarquement/débarquement de passagers, soit pour leur permettre de rejoindre les hangars 5 de stationnement. Cette configuration est particulièrement intéressante car aucun aéronef, véhicule terrestre, ou individu ne peut pénétrer sur la rampe 7 sans y être autorisé.

Par ailleurs, la portion de la rampe 7 disposée à proximité immédiate de l'intersection des deux branches 3 est couverte et constitue la zone d'embarquement 9. Dans cette dernière susceptible d'accueillir des aéronefs 6, les passagers, équipages et clients peuvent embarquer ou débarquer et les biens et chargements peuvent être chargés/déchargés à l'abri des intempéries ou du soleil et surtout à l'abri des regards extérieurs indiscrets.

Par ailleurs, pour permettre de réduire encore le temps nécessaire pour rendre l'aéronef 7 opérationnel en vue d'un nouveau départ, ladite portion de la rampe 7 comporte une plateforme rotative 71 apte à accueillir un aéronef 6 et à le faire pivoter d'environ 180 degrés pour le positionner cockpit en direction du bouclier 8. De même, pour permettre audit aéronef 6 de se déplacer en utilisant ses réacteurs, la façade interne 91 de la zone d'embarquement 9 sera renforcée pour résister aux contraintes mécaniques et thermiques engendrées par la poussée desdits réacteurs.

Le terminal sécurisé 1 comporte avantageusement un parking pour véhicules terrestres intégré dans le bâtiment 2, de préférence au rez-de-chaussée de ce dernier. Cette configuration architecturale est particulièrement intéressante car elle permet de garantir de manière intrinsèque la sécurisation et la protection desdits véhicules terrestres mais également la confidentialité des arrivées et départs par voie terrestre, car la montée et la descente des véhicules sont réalisées à l'intérieur même du bâtiment 2.

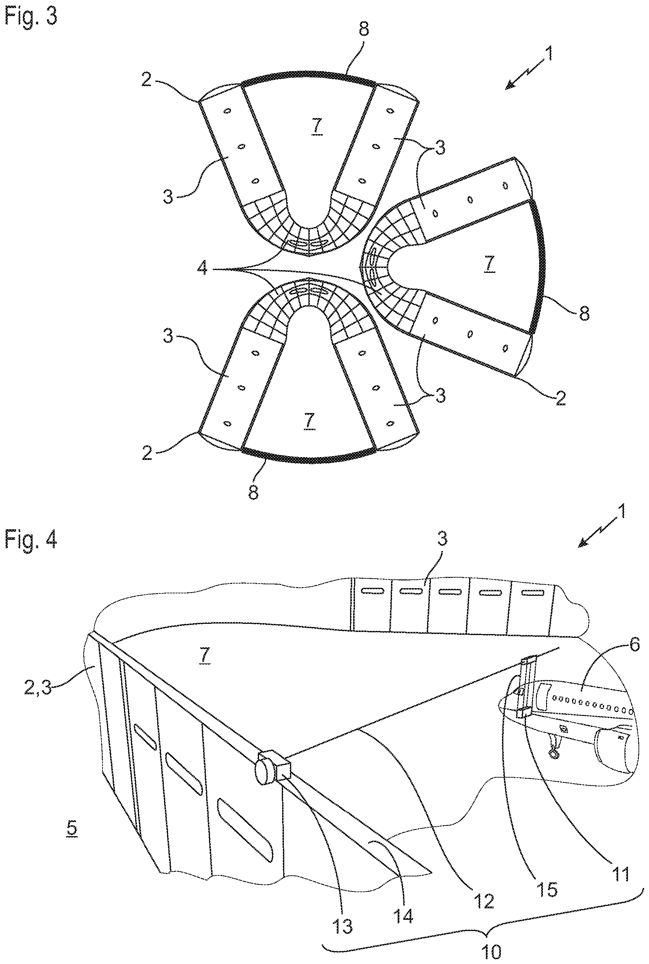

De plus, on comprend bien que la forme en V du bâtiment 2 du terminal sécurisé 1 selon l'invention assure une parfaite modularité de ce dernier. En effet, cette forme géométrie symétrique permet, selon les besoins, l'adaptation des surfaces d'accueil et de parkings (branches 3 et rampe 7). De même, cette forme en V est particulièrement adaptée à une démultiplication des bâtiments 2 en corolle (Cf. figure 3).

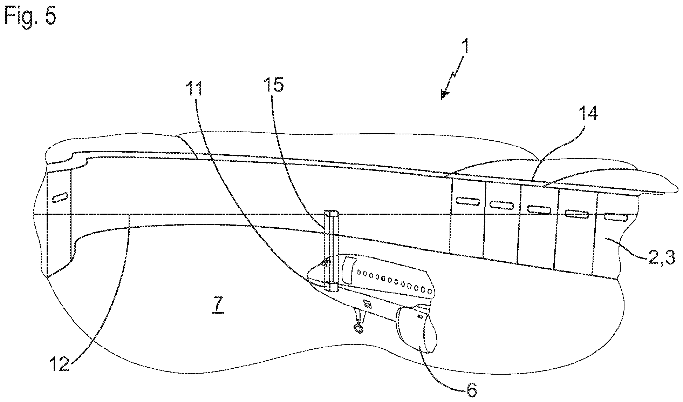

En référence aux figures 4 et 5, afin de garantir l'exploitation en toute sécurité des aéronefs 6 en périodes hivernales ou dans des zones géographiques au climat rude, le terminal sécurisé 1 comporte avantageusement un dispositif de dégivrage 10 autonome ou semi-autonome dont l'objectif est de permettre le dégivrage et l'application de produits d'antigivrage sur les aéronefs 6 situés sur la rampe 7 afin de les rendre opérationnels pour un nouveau départ. Ledit dispositif de dégivrage 10 est pilotable directement par une main d'œuvre au sol limitée ou directement par le commandant de bord de l'aéronef 6 concerné.

En outre, le dispositif de dégivrage 10 permet une diffusion de produit dégivrant ou antigivrant en quantité juste nécessaire adaptée à la géométrie de l'aéronef 6 à traiter et à l'analyse des surfaces givrées ou à protéger.

Selon un mode de réalisation représenté sur les figures 4 et 5, le dispositif de dégivrage 10 est un système suspendu stabilisé composé d'un réservoir distributeur 11, mobile le long d'un câble 12 tendu entre les branches 3 du bâtiment 2 du terminal sécurisé 1. Ledit réservoir distributeur 11 - câble 12 est mobile, selon une direction sensiblement perpendiculaire audit câble 12, grâce à deux chariot-enrouleurs 13 apte chacun à se déplacer, selon une liaison glissière ou pivot glissante, le long de l'arête supérieure d'une des façades internes des branches 3 du bâtiment 2.

On désigne ici par « interne » un élément, par exemple une façade, qui se trouve du côté de la rampe 7 et par « externe » un élément qui se trouve du côté opposé.

Ledit réservoir-distributeur 11 est un dispositif électromécanique contenant un volume défini de produits de dégivrage et d'antigivrage pour un ou plusieurs aéronefs. Ces produits sont délivrés sur les surfaces de l'aéronef à traiter grâce à une ou plusieurs buses, non représentées sur les figures, disposées aux points finaux des circuits de produits gérés, de manière classique, par des électrovannes et pompes non représentées.

Les chariots-enrouleurs 13 sont mobiles le long des branches 3 du bâtiment 2 et comportent à cette fin une ou plusieurs roues 13a ou galets coopérant avec un rail de guidage 14 solidaire de l'arête supérieure de la façade interne de la branche 3 associée. En outre, chaque chariot-enrouleur 13 comprend un treuil motorisé 13b, du type winch/treuils-enrouleurs, permettant d'enrouler le câble 12 de façon symétrique afin d'adapter la longueur effective dudit câble 12 à la géométrie du bâtiment 2 et de maintenir, par blocage résistant, la tension requise dans ledit câble 12. L'alimentation des chariots-enrouleurs 13 est avantageusement fournie par un ensemble balais/collecteurs installé conjointement sur chaque chariot-enrouleur 13 et sur le rail de guidage 14 associé.

Ainsi, avec une telle configuration, le réservoir-distributeur 11 est mobile selon au moins deux degrés de liberté afin de garantir la projection de produits sur toutes les surfaces de l'aéronef à traiter. Le premier degré de liberté, repéré X sur la figure 4, est assuré par le déplacement du réservoir-distributeur 11 le long du câble 12. Le second degré de liberté, repéré Y sur la figure 4, est fourni par le déplacement du câble 12 le long des rails de guidage 14 grâce aux déplacements de chacun des chariots motorisés 13.

Le réservoir-distributeur 11 est de préférence autonome en alimentation électrique en embarquant une ou plusieurs batteries interchangeables et à recharge semi rapide, par exemple, du type charge Li-ion/Li-Po/Li-Fe à 1.5-2C max.

De plus, afin d'assurer une précision des opérations de traitement contre le givre et de réduire les pertes de produits fondants chimiques (dégivrants) et produits préventifs (antigivrants), un troisième degré de liberté, selon une direction verticale repérée Z sur la figure 4, est prévu. Ainsi, le réservoir-distributeur 11 est apte à se déplacer verticalement par rapport au câble 12 grâce à un dispositif extensible 15 composé d'ensembles poulies-câbles ou de vérins. Ce dernier degré de liberté permet également une dépose au sol du réservoir-distributeur 11 pour rechargement des produits et changement de batteries.

Le dispositif de dégivrage 10 est dédié au traitement de tous les aéronefs 6 pris en charge par le terminal sécurisé 1, lesdits aéronefs 6 allant du jet privé de petites dimensions, tel que par exemple un Cessna Citation Mustang, au moyen-courrier du type par exemple Boeing 737 ou Airbus 320. Par conséquent, on comprend bien que toutes les surfaces ne peuvent être directement recouvertes de produits dégivrants ou antigivrants par gravité. Le réservoir-distributeur 11 est donc équipé d'une ou plusieurs buses orientables permettant une projection de produits sur les surfaces difficiles d'accès.

Le dispositif de dégivrage 10 est avantageusement télé-piloté par un intervenant (opérateur au sol ou un personnel navigant technique, un pilote par exemple, directement depuis le cockpit de l'aéronef 6) soit en mode manuel, soit de façon plus intéressante, en mode automatisé. Dans ce dernier mode, il suffira à l'intervenant de rentrer dans l'interface les coordonnées dans l'espace de l'aéronef 6 à traiter, la position physique de l'appareil dans la zone de traitement et le type d'aéronef 6, avant d'enclencher l'ordre de lancement de la procédure de dégivrage. Toutefois, en cas de besoin, l'intervenant pourra déclencher la commande de retour pour remplissage du réservoir-distributeur 11 ou l'arrêt d'urgence.

Afin de garantir la précision et le contrôle des opérations réalisées, le réservoir-distributeur 11 est de préférence équipé d'une caméra, non représentée, transmettant en temps réel les opérations et les surfaces traitées à l'intervenant. Cet équipement optionnel va dans le sens de la qualité mais aussi dans le sens de l'efficience en termes de main d'œuvre qualifiée requise et temps de remise en service de l'aéronef 6.

On comprend tout l'intérêt de ce dispositif de dégivrage 10 selon l'invention. Tout d'abord, d'un point de vue économique, le traitement « au-plus près » des surfaces selon les coordonnées relatives précises de l'aéronef 6 permet d'éviter tout gaspillage à outrance des produits dégivrants ou antigivrants. Enfin, la mise en œuvre du dispositif de dégivrage 10 est rapide et nécessite une main d'œuvre réduite pour les opérations de traitement et de contrôle.

L'autre but du terminal sécurisé 1 est d'assurer la sécurité physique du bâtiment, des passagers et du personnel. Pour cela, l'infrastructure du terminal sécurisé 1 est composée de matériels et de logiciels robustes et éprouvés mais aussi de matériels et de logiciels spécifiquement développés.

Par ailleurs, pour garantir la sécurité du terminal sécurisé 1, ce dernier est organisé en zones de différents niveau de sureté, ces dernières, non représentées sur les figures, étant avantageusement au nombre de 6 :
- ZONE HC : zones relatives aux emplacements en dehors du contrôle du terminal sécurisé 1 (zones publiques ou pistes),
- ZONE SC1 : zones relatives aux emplacements externes sous le contrôle du terminal sécurisé 1 (parkings, route, etc...),
- ZONE SC2 : zones relatives aux emplacements internes au terminal sécurisé 1 et réservées aux membres du personnel auxquelles toute personne externe (visiteurs, passagers, etc.) n'a pas accès,

- ZONE SC3 : zones relatives aux emplacements internes au terminal sécurisé 1 par lesquelles les passagers transitent (accueil, salons, opens pace, etc.), ces zones étant séparées en deux segments : zone nationale et zone internationale,
- ZONE SC4 : zones relatives aux emplacements internes de gestion des aéronefs, ces zones étant protégées par des portes anti-retours configurées dynamiquement en fonction du flux spécifique à chaque vol,
- ZONE FO : zones relatives aux emplacements réservés aux forces de l'ordre et non accessibles aux passagers.

On comprend bien que pour passer d'une zone à une autre, des règles spécifiques de sécurité s'appliqueront en fonction de l'entité qui transite (personnel, passagers, forces de l'ordre, etc.), lesdites règles de sécurité étant mises en œuvre par différents moyens et équipements, non représentés, et détaillés ci-après.

Plus généralement, les zones SCi: SC1, SC2, SC3, ..., sont des zones relatives aux emplacements externes et/ou internes au terminal sécurisé 1 sous le contrôle de ce dernier.

Ainsi, pour permettre une surveillance de l'ensemble des zones SCi (les zones HC et FO n'étant pas couvertes pour des raisons légales), un système de vidéo surveillance en circuit fermé, avantageusement en haute définition, est mis en place dans le terminal sécurisé 1.

Ledit système de vidéo surveillance comprend de préférence des caméras fixes et des caméras panoramiques pour la surveillance des zones à large spectre (espace aéronefs, open space, etc.). Ces caméras sont avantageusement du type caméra IP, c'est-à-dire une caméra utilisant le protocole Internet pour transmettre des images et des signaux de commande via une liaison rapide du type Ethernet, et ont de préférence au moins les caractéristiques suivantes : génération de flux Haute Définition (1080P) à 30 images par seconde, zoom optique x5 ne nécessitant un niveau de luminosité que de 0,3 lux.

Les communications entre lesdites caméras et les serveurs vidéo sont chiffrées grâce à un protocole de sécurisation des échanges, du type Transport Layer Security (TLS) ou similaire, chaque caméra disposant alors de sa propre clé d'identification. Lesdites communications sont réalisées au travers d'un réseau de communication interne dédié et transitent par fibre optique ou équivalent afin de supprimer tout risque d'interception électromagnétique.

Par ailleurs, les images produites par les caméras du système de vidéosurveillance sont transmises en temps réel au poste de commande (PC) sécurité du terminal sécurisé 1 à accès sécurisé et contrôlé situé de préférence dans une zone SC2.

Les caméras sont de préférence placées dans des dômes à vitre teintée ou sans teint pour éviter tout contournement ou analyse de leur fonctionnement.

Ledit système de vidéo surveillance comporte également une infrastructure technique interne située en zone SC2 et à accès sécurisé et contrôlé et munie de serveurs informatiques permettant de stocker l'ensemble des vidéos pendant une durée minimale de 2 ans.

Le système de vidéosurveillance dispose en outre d'un système de détection de mouvement et de reconnaissance faciale permettant de déclencher une alarme en cas, par exemple, de non- respect des zones tel que, par exemple, une personne inconnue étant détectée en zone SC2.

Pour compléter le système de vidéo surveillance, un réseau de caméras thermiques, non représentées sur les figures, est avantageusement implémenté dans les différentes zones. Ainsi, en zone N1, ces caméras thermiques permettent la détection de mouvements sur les emplacements non éclairés ou ne bénéficiant pas d'une luminosité suffisante durant la nuit. De même, en zone SC2 et SC3, ces caméras thermiques sont utilisées au niveau des accès au terminal (SC2 pour les salariés, SC3 pour les passagers) pour détecter de manière non intrusive tout matériel pouvant être dissimulé dans les véhicules ou les vêtements.

Selon une configuration préférée, lesdites caméras thermiques ont une portée de 150 mètres, diffusent un flux vidéo au moins de qualité VGA à 30 images par seconde sécurisé par le protocole TLS et disposent d'un niveau de sensibilité inférieur à 70mK.

Par ailleurs, le terminal sécurisé 1 selon l'invention est aussi équipé de plusieurs scanners à rayon X utilisés de la manière suivante :
- un scanner dédié aux bagages au départ et placé au niveau de bouclier des arrivées véhicules ;
- un scanner mis à disposition des forces de l'ordre au niveau de l'accès principal aux aéronefs, que ce soit pour les arrivées ou les départs ;
- un scanner dédié aux bagages à main et placé au niveau du bouclier des arrivées piéton ;
- un scanner dédié aux marchandises aussi bien pour les passagers que pour le terminal ;
- un scanner dédié à l'entrée du personnel avec portail de détection métallique.

La technologie ultrason est également utilisée au sein du terminal sécurisé 1 selon l'invention pour la surveillance des aéronefs, elle sera détaillée supra.

Enfin, le terminal sécurisé 1 comporte également des boucliers de transit au niveau du passage de la zone NI à la zone SC3, ces derniers étant paramétrables, définis et adaptés selon les besoins : temps réels et/ou planification.

Avec une telle configuration, la sécurité des passagers est principalement assurée par tous les équipements du terminal sécurisé 1 décrits ci-dessus et utilisés à assurer la sureté du terminal, mais aussi par un ensemble de processus opérationnels.

Ainsi, l'accès aux zones internes du terminal sécurisé 1 (SC2 à SC4) n'est autorisé qu'après le passage par un bouclier dans lequel un certain nombre de vérifications sont faites. Ces actions permettent de garantir la sécurité des autres passagers mais aussi des membres du personnel.
- Eligibilité du passager ;
- Passage au rayon X des bagages soute ;
- Passage au rayon X des bagages à main ;
- Passage aux infrarouges du passager.

Pour garantir la sécurité des biens au sein du terminal sécurisé 1, il est prévu un système de gestion des containers permettant notamment d'acheminer, dans des containers sécurisés, non seulement les marchandises mais également les bagages en soutes, afin de garantir l'intégrité de leur contenu de leur point de départ à leur point d'arrivée, ces containers sécurisés disposant d'une serrure électronique fonctionnant sur la base d'un code à au moins six chiffres devant être saisi sur le clavier du ou des containers.

Ainsi, à chaque vol d'un aéronef 6 est associé un code de fermeture et un code d'ouverture unique selon le procédé suivant :
- au moment du départ, le système de gestion des containers génère deux codes uniques : un code de fermeture qui est transmis au membre du personnel en charge des bagages en soute (et éventuellement au membre du personnel en charge des marchandises si traitées dans un flux différent) et un code d'ouverture imprimé automatiquement sur un bordereau de livraison qui est remis à un personnel naviguant ou au pilote par un membre personnel d'accueil ;
- à l'arrivée, le système de gestion des containers génère deux codes uniques : un code de fermeture imprimé automatiquement sur un bordereau de prise en charge remis à un personnel naviguant ou au pilote par un membre du personnel d'accueil et un code d'ouverture qui est transmis au membre du personnel en charge du transport des biens.

Une fois le container fermé, il ne peut plus être ouvert et, une fois ouvert, il ne peut plus être fermé. En cas d'oubli de marchandise, un nouveau container doit obligatoirement être fourni, aucun code de secours n'étant possible.

Toutefois, le cas échéant, il est possible de générer un second code d'ouverture et de le transmettre, uniquement sur demande des autorités, si celles-ci souhaitent effectuer des vérifications des biens contenus dans un container. Ce code n'est valable qu'une seule fois, le verrouillage est automatique après la fermeture des biens vérifiés.

Le dispositif de génération des codes associé au système de gestion des containers est basé sur les trois technologies suivantes :
- la technologie SIM/SAM connue permettant l'intégration d'une puce électronique unique dans chaque container (SIM : Subscriber Identity Module en anglais) et l'utilisation d'un générateur unique sur les serveurs (SAM : Secure Access Module en anglais, module d'accès sécurisé en français), l'ensemble des calculs cryptographiques étant effectués au sein des microprocesseurs contenus dans lesdites puces, aucune clé de sécurité n'étant donc exposée ;
- la technologie de diversification de clés utilisant les algorithmes de chiffrement par blocs selon un réseau de Feistel ;
- un protocole de calcul de codes basé sur la technologie OTP (One Time Password en anglais, mot de passe à usage unique en français).

En dehors de la sécurité physique, l'anonymat des passagers fait partie intégrante du concept du terminal sécurisé 1 selon l'invention. Cet anonymat des passagers, qui est protégé par la mise en place du bouclier 8 rejoignant les extrémités libres des branches 3 du bâtiment 2, est également possible grâce à des procédés techniques et organisationnels mis en œuvre.

Tout d'abord, les images de vidéo surveillance sont enregistrées dans leur intégralité sur les serveurs sécurisés du système de vidéosurveillance, mais sont restituées sur les écrans de contrôle du PC sécurité avec un masquage automatique des visages basé sur la technologie de reconnaissance faciale basée, par exemple, sur la méthode « Eigenface » qui utilise un ensemble de vecteurs propres afin de résoudre le problème de la reconnaissance du visage humain. Ledit masquage est synchronisé avec la base de données relative aux employés du terminal sécurisé 1, de sorte que tous les visages inconnus, c'est-à-dire non répertoriés dans ladite base, sont automatiquement masqués. Toutefois, cette méthode de masquage n'est appliquée que pour les zones au-delà de N1.

De plus, les arrivées et départs sont effectués par des zones de transit qui sont dédiées à chaque vol. Ainsi, les passagers de deux vols ne peuvent pas se croiser physiquement, sauf dans les espaces communs si le client ne bénéficie pas d'un espace de transit privatif, lesdits espaces de transit privatifs permettant aux passagers d'être isolés des autres passagers de leur véhicule à leur aéronef.

En dehors de ses aspects, afin de garantir la confidentialité des passagers, les salariés ne sont pas autorisés à disposer de leur téléphone mobile ou appareil photo personnel au-delà de la zone SC2. Les équipements de communication qui sont alors mis à la disposition des salariés, ne permettent pas d'émettre des appels vers l'extérieur ni de prendre des photos.

Le terminal sécurisé 1 est également configuré pour garantir la sécurité liée au personnel, cette dernière étant assurée par les équipements et procédures suivants :
- une procédure de recrutement spécifique ;
- un sas d'accès pour l'entrée du personnel avec passage systématique au travers de portails de sécurité, avantageusement à rayons X et de détection de métaux ;
- une authentification biométrique pour le contrôle des accès aux espaces de travail ;
- une limitation des objets personnels pouvant être présents dans les zones internes au terminal ;
- une limitation des moyens de communication avec l'extérieur ;
- un badge unique sécurisé et personnalisé pour chaque salarié nécessaire à tout déplacement dans le terminal sécurisé 1.

De plus, afin d'éviter tout risque lié à l'intrusion indésirable d'objets ou produits potentiellement dangereux, à chaque arrivée, les employés sont confinés dans un vestiaire disposant de murs renforcés où ils doivent se démunir de tout objet personnel et revêtir leur tenue professionnelle, sauf pour les employés administratifs disposant d'une accréditation spécifique. Ensuite, ils doivent passer sous un portique de détection métallique et pourront de manière aléatoire faire l'objet d'un contrôle par analyse de produit dangereux. Chaque employé dispose d'un badge électronique dans lequel ils devront insérer leur carte à puce décrite ci-après. Ce badge permettra aux employés d'être automatiquement reconnus dans les différentes zones du terminal sécurisé 1 et de s'authentifier sans avoir à l'apposer sur un lecteur. Pour accéder au terminal, les employés utilisent un sas d'accès anti-retour à passage unique qui leur est dédié. Pour entrer comme pour sortir, ils doivent présenter leur carte à puce sur un lecteur et s'authentifier avec leur empreinte digitale (zone NI à zone SC2). Pour passer d'une zone à une autre chaque employé devra s'identifier via une authentification biométrique ou faciale.

A cet effet, les capteurs d'empreintes biométriques utilisés pour authentifier les employés intègrent de nombreuses technologies pour garantir la non-falsification d'une empreinte telles que :
- lecteur optique sans contact ;
- détection de faux doigt et doigt vivant ;
- intégration conjointe du réseau veineux ;
- chiffrement natif des dactylogrammes ;
- aucun stockage local d'empreintes.

De plus, les empreintes ne sont pas stockées dans un système central, mais dans les cartes à puces des employés. En outre, la correspondance est effectuée deux fois, une fois sur la carte à puce de l'employé et une fois sur le lecteur. Cette approche permet d'utiliser deux tiers de confiance différents.

Pour pouvoir s'identifier au sein du terminal sécurisé 1, chaque employé du personnel dispose de préférence d'au moins :
- une carte à puce personnelle sécurisée ;
- un badge électronique à conserver sur lui ;
- un moyen de communication interne, si nécessaire ;
- une tablette numérique afin de pouvoir accéder au système d'information.

Ladite carte à puce fournie à chaque employé répond à la certification de sécurité EAL (Evaluation Assurance Level en anglais, niveau d'assurance en français), niveau 5+ au moins. Son enrôlement est très sécurisé puisque une fois délivrée, cette carte à puce personnelle ne peut être modifiée. Ladite carte à puce contient au moins les données chiffrées suivantes :
- les images numérisées du visage (en couleur, en noir et blanc et en infrarouge) de l'employé ;
- les dactylogrammes des doigts des deux mains ;
- l'empreinte veineuse des deux mains ;
- les informations d'identité standards de l'employé : nom, prénom, qualité, durée du contrat de travail au moins.

La carte à puce ne peut être programmée qu'en la présence du directeur des ressources humaines et du directeur de la sécurité du terminal sécurisé 1. La carte à puce de ces deux personnes dispose d'un profil spécifique puisque chacune d'entre elle contient un tiers de la clé de chiffrement nécessaire à l'enrôlement des cartes des autres employés. Ainsi, les secrets sont répartis sur différentes supports et ne sont pas détenus par aucun système ou personne uniques. Pour accéder à ces clés, le porteur doit s'identifier par son empreinte digitale.

Pour communiquer avec le lecteur sans contact ou le lecteur biométrique, la carte à puce établit un canal de communication sécurisée évitant les attaques par écoute de flux. Pour ce faire, la carte à puce utilise la technologie SIM/SAM, elle-même se comportant en SIM et chaque équipement d'authentification disposant d'une SAM.

Le badge électronique est obligatoire pour chaque employé. Il intègre le mécanisme de sécurité unique SIM/SAM et est composé :
- d'un emplacement pour la carte à puce (SIM) ;
- d'un composant de sécurité (SAM) ;
- d'un écran tactile à encre électronique affichant un pavé numérique avant activation et le nom, prénom, qualité de l'employé après activation ;
- d'une interface radio fréquence RFID (de l'anglais Radio Frequency IDentification) longue portée ;
- d'une interface de communication sans fil du type BlueTooth Low Energy (BLE) 4.2 ou analogue.

Pour activer le badge, l'employé doit insérer sa carte à puce dans le badge et saisir son code d'identification personnel PIN (de l'anglais Personal Identification Number). Pour des raisons évidentes de sécurité, au bout de 3 codes PIN erronés, la carte sera définitivement bloquée et une nouvelle carte devra être créée.

Chaque badge dispose d'un transpondeur permettant de le localiser à tout moment dans le terminal sécurisé 1, mais aussi de le bloquer à distance. Chaque employé, en fonction de sa qualité, est autorisé à accéder dans certaines zones uniquement, si ce dernier est détecté dans une zone non autorisée, une alerte est émise au PC sécurité et ses accréditations seront alors temporairement bloquées.

Le badge n'est pas autorisé à sortir du terminal sécurisé 1. Par conséquent, s'il est activé en dehors de sa zone normale d'utilisation ou sans une carte d'employé valide, l'ensemble des données qu'il contient sont automatiquement détruites pour éviter tout « reverse engineering » (en français rétro-ingénierie ou ingénierie inversée : activité consistant à étudier un objet pour en déterminer le fonctionnement interne ou la méthode de fabrication) de ses secrets.

Les téléphones personnels n'étant pas autorisés à l'intérieur du terminal sécurisé 1, les employés disposent de moyens de communication sécurisés et bridés leur permettant de communiquer uniquement avec les autres membres du personnel ou éventuellement les autorités.

Ainsi, plusieurs moyens de communication sécurisés sont mis à disposition du personnel : téléphone, smartphone, ou encore Talkie-Walkie.

Chacun de ces moyens de communication est associé à un employé. Il est déverrouillé par un code personnel, mais aussi par la présence en champs proche de son badge qui doit être activé.

Par ailleurs, ces moyens de communication permettent un accès aux plateformes de gestion du terminal sécurisé 1 et disposent de plusieurs mécanismes de sécurité.

Ainsi, les moyens de communication se verrouillent automatiquement si l'employé porteur s'en éloigne ou si le badge dudit employé est désactivé (problème de batterie, retrait de la carte, etc.). De même, les moyens de communication sont automatiquement bloqués, localisés et ses données effacées s'il est allumé en dehors de sa zone géographique de fonctionnement.

En outre, le terminal sécurisé 1 assure la sécurité des aéronefs 6 à partir du moment où ils sont dans la zone SC4, c'est-à-dire dans les hangars 5 ou sur la rampe 7. Cette sécurité est assurée par plusieurs moyens de sécurité qui sont non intrusifs et ne nécessitant aucun équipement à l'intérieur ou sur l'appareil. Ces moyens de sécurité des aéronefs 6 comportent au moins un dispositif de surveillance vidéo, un dispositif de détection périmétrique et le contrôle des appareils utilisés sur la zone SC4.

Le dispositif de surveillance vidéo permet de couvrir chaque aéronef, ou groupe d'aéronef par, d'une part, une surveillance d'ensemble grâce à des caméra panoramiques et, d'autre part, une surveillance locale par des caméras orientées spécifiquement sur des emplacements précis tels que, par exemple, portes d'accès, soute, etc.

A partir du moment où un aéronef 6 est entré dans la zone SC4 du terminal sécurisé 1, il dispose alors de l'un des statuts suivants :
- en mouvement : l'aéronef 6 est dans la zone SC4 du terminal sécurisé 1, il est alors identifié par son matricule qui est enregistré comme « autorisé » jusqu'à son départ ;
- stationné, en activité : seul le mouvement de l'aéronef 6 déclenche une alerte ;
- stationné, isolé : tous les mouvements de l'aéronef 6 lui-même mais aussi à proximité déclenche une alerte.

Dans tous les cas de figures, si le dispositif de surveillance vidéo n'est plus en capacité de localiser l'aéronef 6, par exemple en utilisant la reconnaissance optique basée sur son matricule, une alerte est envoyée.

Le terminal sécurisé est équipé d'un dispositif de détection périmétrique, fixe ou mobile, spécifiquement conçu. Ce dernier permet de couvrir et de gérer les types de détections non couverts par le dispositif de surveillance vidéo précédemment décrit.

Chaque dispositif de détection périmétrique comporte de préférence au moins quatre entités disposant chacune d'au moins un émetteur et d'un récepteur de faisceau laser orientable, de deux caméras miniatures directionnelle, d'un émetteur à infrarouge directionnel, d'un émetteur à ultrason directionnel, d'une connexion sans fil au système de supervision et d'un système de configuration manuel ou autonome.

Pour chaque aéronef 6 ou groupe d'aéronefs 6, les quatre entités sont placées autour de la zone à surveiller et connectés les unes avec les autres pour créer une seule et unique entité logique de détection périmétrique.

Une alerte est alors déclenchée si au moins un des évènements suivants se produit :
- le faisceau laser reliant les entités entre elles est rompu ;
- une des caméras constate un mouvement sur l'emplacement précis qu'elle cible ;
- le système infrarouge détecte une masse ;
- le système ultrason détecte un changement d'écho.

Pour les aéronefs 6 basés, le dispositif de détection périmétrique est positionné directement dans le sol du terminal sécurisé 1, pour les autres aéronefs 6 il est mobile et comporte des pieds amovibles.

Le dispositif de détection périmétrique peut être activé et désactivé par des membres du personnel du terminal sécurisé 1 habilités à intervenir sur l'aéronef 6, seulement si un ordre d'intervention a bien été notifié.

Le terminal sécurisé 1 est en outre muni d'équipements lourds tels que, par exemple, des tracteurs ou des escaliers roulants. Ces derniers sont tous équipés d'un système de démarrage électronique contrôlé par le badge de l'employé et utilisant aussi la technologie SIM/SAM. Ledit badge joue alors le rôle de SIM et le module SAM est intégré dans chaque équipement lourd. Par ailleurs, l'accès auxdits équipements lourds n'est autorisé que pour des employés ayant la qualification requise. Pour démarrer chaque équipement lourd, l'employé doit en outre effectuer une authentification biométrique. Cette authentification restera valable si l'employé reste à une distance raisonnable dudit équipement, dans le cas contraire, pour pouvoir redémarrer l'équipement, l'employé devra de nouveau s'authentifier. Dans tous les cas, le déplacement dudit équipement lourd n'est autorisé que si l'employé authentifié se trouve bien à bord.

Pour garantir la sécurité des protocoles de communication, le terminal sécurisé 1 utilise avantageusement la communication sans contact par radio fréquence, RFID, cette dernière utilisant de préférence la bande de fréquence 13,56 Mégahertz. Toutefois, comme toute communication radio sans contact, une personne mal intentionnée peut écouter ces communications à l'aide d'équipements spécialisés. Il est donc primordial de résoudre le problème de sécurité lié intrinsèquement à ce type de communication. Pour cela, toutes les communications entre les puces et les lecteurs sont avantageusement conformes à la norme GlobalPlatform Card Spécification 2.2.1. et à ses amendements pour l'établissement d'un canal sécurisé du type SCP11 (de l'anglais Secure Communication Protocol).

L'intégration complémentaire d'un mécanisme d'authentification mutuelle (SIM/SAM) garantit non seulement la sécurité mais aussi l'intégrité des données échangées.

De même, le terminal sécurisé 1 utilise avantageusement pour les communications entre les badges et les périphériques le protocole de communication par radio fréquence BLE 4.2 utilisant la bande de fréquence 2,4 Gigahertz, ce dernier étant un protocole de communication destiné principalement aux objets connectés pour lesquels le besoin en débit de transmission de données est faible et très économe en consommation électrique. Toutefois, comme tout protocole sans contact, il peut être écouté par des équipements spécialisés. Pour résoudre le problème de sécurité lié intrinsèquement à la communication par radio fréquence, toutes les communications entre les badges et les périphériques sont chiffrées de préférence par la cryptographie sur les courbes elliptiques ou ECC (de l'anglais Elliptic Curve Cryptography), du type ECC256 basé sur des points dérivés propres au terminal sécurisé 1. De plus, pour éviter les attaques par usurpation (spoofing en anglais) des identifiants physiques, appelés adresses MAC (de l'anglais Media Access Control), les badges implémentent le protocole IRK (de l'anglais Identity Resolvable Key).

### Possibilité d'application industrielle

Le terminal sécurisé 1 selon l'invention est plus particulièrement destiné au transport aérien des hommes d'affaire, mais il peut également être envisagé pour le transport aérien de passagers classiques ou pour le transport terrestre ou maritime.

Enfin, il va de soi que les exemples de terminal sécurisé 1 conformes à l'invention qui viennent d'être décrits ne sont que des illustrations particulières, en aucun cas limitatives de l'invention.

## Revendications

1. Terminal sécurisé (1) pour le transport aérien de passagers dont l'infrastructure technique et opérationnelle permet d'assurer la sécurité physique du bâtiment, des aéronefs, des biens, des passagers et du personnel naviguant, technique et administratif et la confidentialité des passagers et de leurs biens, ledit terminal sécurisé (1) comportant moins un bâtiment (2) ayant une section horizontale en forme globale de V et comportant deux branches (3) s'étendant depuis une zone médiane (4), constituant des hangars (5) de stationnement pour des aéronefs (6) et déterminant entre elles une zone centrale (7) non couverte, appelée "rampe", agencée pour permettre la manipulation et le stationnement d'aéronefs (6), la rampe (7) étant physiquement isolée de l'environnement extérieur du terminal sécurisé (1) par une barrière (8), nommée "bouclier", rejoignant les extrémités libres des branches (3) et transformant alors l'ensemble bâtiment (2) - rampe (7) en une enceinte sécurisée, le bouclier (8) participant également à préserver la confidentialité des mouvements d'embarquement, débarquement et de chargement, déchargement des aéronefs stationnés sur la rampe (7).

2. Terminal sécurisé (1) selon la revendication 1, **caractérisé en ce que** la portion de la rampe (7) disposée à proximité immédiate de la zone médiane (4) est couverte et constitue la zone d'embarquement (9) susceptible d'accueillir au moins un aéronef (6) et permettant l'embarquement/débarquement des passagers, équipages et clients et le chargement/déchargement des biens et chargements à l'abri des intempéries ou du soleil et surtout à l'abri des regards extérieurs indiscrets.

3. Terminal sécurisé (1) selon la revendication 2, **caractérisé en ce que** ladite portion de la rampe (7) comporte une plateforme rotative (71) apte à accueillir un aéronef (6) et à le faire pivoter d'environ 180 degrés pour le positionner cockpit en direction du bouclier (8) et **en ce que** la façade interne (91) de la zone d'embarquement (9) est renforcée pour résister aux contraintes mécaniques et thermiques engendrées par la poussée desdits réacteurs d'un aéronef (6).

4. Terminal sécurisé (1) selon l'une quelconque des revendications 1 à 3, **caractérisé en ce qu'**il comporte un dispositif de dégivrage (10) autonome ou semi-autonome permettant le dégivrage et l'application de produits d'antigivrage sur les aéronefs (6) situés sur la rampe (7) afin de les rendre opérationnels pour un nouveau départ, ledit dispositif de dégivrage (10) étant pilotable directement par une main d'œuvre au sol ou directement par le commandant de bord de l'aéronef (6) concerné.

5. Terminal sécurisé (1) selon la revendication 4, **caractérisé en ce que** le dispositif de dégivrage (10) est un système suspendu stabilisé composé d'un réservoir distributeur (11) muni à une ou plusieurs buses, mobile le long d'un câble (12) tendu entre les branches (3) du bâtiment (2) du terminal sécurisé (1), ledit ensemble réservoir distributeur (11) - câble (12) étant mobile, selon une direction sensiblement perpendiculaire audit câble (12) grâce à deux chariot-enrouleurs (13) apte chacun à se déplacer le long de l'arête supérieure d'une des façades internes des branches (3) du bâtiment (2).

6. Terminal sécurisé (1) selon la revendication 5, **caractérisé en ce que** le réservoir-distributeur (11) est apte à se déplacer verticalement par rapport au câble (12) grâce à un dispositif extensible (15).

7. Terminal sécurisé (1) selon l'une quelconque des revendications 1 à 6, **caractérisé en ce que**, pour assurer la sécurité, il est organisé en zones de différents niveaux de sureté, ces dernières étant au moins les suivantes :
- ZONE HC : zones relatives aux emplacements en dehors du contrôle du terminal sécurisé (1),
- ZONES SCi : zones relatives aux emplacements externes et/ou internes au terminal sécurisé (1) sous le contrôle dudit terminal sécurisé (1),
- ZONE FO : zones relatives aux emplacements réservés aux forces de l'ordre et non accessibles aux passagers,
lors du passage d'une zone à une autre, des règles spécifiques de sécurité s'appliqueront en fonction de l'entité qui transite, lesdites règles de sécurité étant mises en œuvre par différents moyens et équipements.

8. Terminal sécurisé (1) selon la revendication 7, **caractérisé en ce qu'**il comporte un système de vidéo surveillance en circuit fermé pour permettre une surveillance de l'ensemble des zones SCi, les images produites par ledit système de vidéosurveillance étant stockées sur les serveurs sécurisés dudit système de vidéosurveillance et transmises en temps réel à un poste de commande (PC) sécurité du terminal sécurisé (1) à accès sécurisé et contrôlé, lesdites images transmises au PC étant avec un masquage automatique des visages autres que ceux des employés du terminal sécurisé (1).

9. Terminal sécurisé (1) selon la revendication 8, **caractérisé en ce que** ledit système de vidéosurveillance comprend des caméras fixes et des caméras panoramiques, lesdites caméras étant des caméras haute définition et utilisant le protocole Internet pour transmettre de manière chiffrée des images et des signaux de commande vers des serveurs vidéo au travers d'un réseau de communication interne dédié en fibre optique ou analogue.

10. Terminal sécurisé (1) selon l'une quelconque des revendications 8 ou 9, **caractérisé en ce que** le système de vidéosurveillance dispose d'un système de détection de mouvement et de reconnaissance faciale et d'un réseau de caméras thermiques.

11. Terminal sécurisé (1) selon l'une quelconque des revendications 7 à 10, **caractérisé en ce qu'**il comporte des boucliers de transit paramétrables au niveau du passage d'une zone SCi à une autre, et plusieurs scanners à rayon X utilisés au moins de la manière suivante :
- un scanner dédié aux bagages au départ et placé au niveau du bouclier des arrivées véhicules ;
- un scanner mis à disposition des forces de l'ordre au niveau de l'accès principal aux aéronefs (6), que ce soit pour les arrivées ou les départs ;
- un scanner dédié aux bagages à main et placé au niveau du bouclier des arrivées piéton ;
- un scanner dédié aux marchandises aussi bien pour les passagers que pour le terminal ;
- un scanner dédié à l'entrée du personnel avec portail de détection métallique.

12. Terminal sécurisé (1) selon l'une quelconque des revendications 1 à 11, **caractérisé en ce qu'**il comporte un système de gestion des containers permettant d'acheminer, dans des containers sécurisés les marchandises et/ou bagages, afin de garantir l'intégrité de leur contenu de leur point de départ à leur point d'arrivée, ces containers sécurisés disposant d'une serrure électronique fonctionnant sur la base de codes à au moins six chiffres devant être saisis sur le clavier du ou des containers, un code de fermeture et un code d'ouverture uniques étant associé à chaque vol d'un aéronef 6 de sorte qu'une fois un container fermé, il ne peut plus être ouvert et, une fois ouvert, il ne peut plus être fermé, sauf demande expresse des autorités.

13. Terminal sécurisé (1) selon l'une quelconque des revendications 1 à 12, **caractérisé en ce qu'**il est configuré pour garantir la sécurité liée à son personnel, cette dernière étant assurée par au moins les équipements et procédures suivants :
- une procédure de recrutement spécifique ;
- un sas d'accès pour l'entrée du personnel avec passage systématique au travers de portails de sécurité ;
- une authentification biométrique pour le contrôle des accès aux espaces de travail ;
- une limitation des objets personnels pouvant être présents dans les zones internes au terminal sécurisé (1) ;
- une limitation des moyens de communication avec l'extérieur ;
- un badge unique sécurisé et personnalisé pour chaque salarié nécessaire à tout déplacement dans le terminal sécurisé (1).

14. Terminal sécurisé (1) selon la revendication 13, **caractérisé en ce que** ledit badge est activé par l'insertion d'une carte à puce unique sécurisée et personnalisée et la saisie par l'employé de son code d'identification personnel, ladite carte à puce ne pouvant être programmée qu'en la présence du directeur des ressources humaines et du directeur de la sécurité du terminal sécurisé (1) et contenant au moins les données chiffrées suivantes :
- les images numérisées du visage (en couleur, en noir et blanc et en infrarouge) de l'employé ;
- les dactylogrammes des doigts des deux mains ;
- l'empreinte veineuse des deux mains ;
- les informations d'identité standards de l'employé : nom, prénom, qualité, durée du contrat de travail au moins.

15. Terminal sécurisé (1) selon l'une quelconque des revendications 1 à 14, **caractérisé en ce que**, pour assurer la sécurité des aéronefs (6) à partir du moment où ils sont sur la rampe (7), il comporte des moyens de sécurité non intrusifs et ne nécessitant aucun équipement à l'intérieur ou sur l'aéronef (6), ces moyens de sécurité comportant au moins un dispositif de surveillance vidéo, un dispositif de détection périmétrique et le contrôle des appareils utilisés principalement dans les hangars (5) et sur la rampe (7).

## Patentansprüche

1. Gesichertes Terminal (1) für den Lufttransport von Passagieren, dessen technische und betriebliche Infrastruktur es ermöglicht, die physische Sicherheit des Gebäudes, der Flugzeuge, des Eigentums, der Passagiere und des Flug-, Technik- und Verwaltungspersonals und die Vertraulichkeit der Passagiere und ihres Eigentums sicherzustellen, wobei das gesicherte Terminal (1) mindestens ein Gebäude (2) umfasst, das einen horizontalen Querschnitt von allgemein V-förmiger Form aufweist und zwei sich von einem Mittenbereich (4) aus erstreckende Schenkel (3) umfasst, die Abstellhangars (5) für Flugzeuge (6) bilden und zwischen sich einen als "Vorfeld" bezeichneten, nicht überdachten zentralen Bereich (7) bestimmen, der so eingerichtet ist, dass er die Abfertigung und das Abstellen von Flugzeugen (6) ermöglicht, wobei das Vorfeld (7) über eine als "Abschirmung" bezeichnete Barriere (8), die die freien Enden der Schenkel (3) miteinander verbindet und dadurch die Einheit Gebäude (2)
- Vorfeld (7) in einen gesicherten Raum verwandelt, physisch von der äußeren Umgebung des gesicherten Terminals (1) isoliert ist, wobei die Abschirmung (8) ebenfalls dazu beiträgt, die Vertraulichkeit der Einsteige-, Aussteige- und Be- und Entladebewegungen der auf dem Vorfeld (7) abgestellten Flugzeuge zu wahren.

2. Gesichertes Terminal (1) nach Anspruch 1, **dadurch gekennzeichnet, dass** der Abschnitt des Vorfelds (7), der in unmittelbarer Nähe des Mittenbereichs (4) angeordnet ist, überdacht ist und den Flugsteigbereich (9) bildet, der mindestens ein Flugzeug (6) aufnehmen kann und das Ein- und Aussteigen der Passagiere, Crews und Kunden und das Ein- und Ausladen des Eigentums und der Fracht vor Witterung oder Sonne geschützt und insbesondere vor indiskreten Blicken von außen geschützt ermöglicht.

3. Gesichertes Terminal (1) nach Anspruch 2, **dadurch gekennzeichnet, dass** der Abschnitt des Vorfelds (7) eine Drehplattform (71) umfasst, die ein Flugzeug (6) aufnehmen und es um etwa 180 Grad schwenken kann, um es mit dem Cockpit in Richtung der Abschirmung (8) zu positionieren, und dadurch, dass die Innenfassade (91) des Flugsteigbereichs (9) verstärkt ist, um den mechanischen und thermischen Belastungen, die durch den Schub der Triebwerke eines Flugzeugs (6) verursacht werden, standzuhalten.

4. Gesichertes Terminal (1) nach einem der Ansprüche 1 bis 3, **dadurch gekennzeichnet, dass** es eine autonome oder halbautonome Enteisungsvorrichtung (10) umfasst, die das Enteisen und das Auftragen von Vereisungsschutzprodukten auf die sich auf dem Vorfeld (7) befindenden Flugzeuge (6) ermöglicht, um sie für einen erneuten Start betriebsbereit zu machen, wobei die Enteisungsvorrichtung (10) direkt von einer Bodenmannschaft oder direkt vom Kapitän des betreffenden Flugzeugs (6) gesteuert werden kann.

5. Gesichertes Terminal (1) nach Anspruch 4, **dadurch gekennzeichnet, dass** es sich bei der Enteisungsvorrichtung (10) um ein stabilisiertes Hängesystem handelt, das aus einem mit einer oder mehreren Düsen ausgestatteten Ausgabebehälter (11) besteht, der entlang eines zwischen den Schenkeln (3) des Gebäudes (2) des gesicherten Terminals (1) gespannten Seils (12) beweglich ist, wobei die Einheit Ausgabebehälter (11) - Seil (12) dank zwei Laufkatzen (13), die sich jeweils entlang der oberen Kante einer der Innenfassaden der Schenkel (3) des Gebäudes (2) bewegen können, in einer im Wesentlichen zum Seil (12) senkrechten Richtung beweglich ist.

6. Gesichertes Terminal (1) nach Anspruch 5, **dadurch gekennzeichnet, dass** sich der Ausgabebehälter (11) dank einer ausziehbaren Vorrichtung (15) in Bezug auf das Seil (12) vertikal bewegen kann.

7. Gesichertes Terminal (1) nach einem der Ansprüche 1 bis 6, **dadurch gekennzeichnet, dass** es, um die Sicherheit sicherzustellen, in Bereiche mit unterschiedlichen Sicherheitsstufen gegliedert ist, wobei es sich bei Letzteren um mindestens die folgenden handelt:
- HC-BEREICH: Bereiche, die die Orte außerhalb der Kontrolle des gesicherten Terminals (1) betreffen,
- SCi-BEREICHE: Bereiche, die die Orte außerhalb und/oder innerhalb des gesicherten Terminals (1) unter der Kontrolle des gesicherten Terminals (1) betreffen,
- FO-BEREICH: Bereiche, die die Orte betreffen, die den Ordnungskräften vorbehalten und für die Passagiere nicht zugänglich sind,
wobei beim Übergang von einem Bereich in einen anderen je nach der sich hindurchbewegenden Organisation spezielle Sicherheitsregeln gelten, wobei die Sicherheitsregeln über unterschiedliche Mittel und Ausrüstungen umgesetzt werden.

8. Gesichertes Terminal (1) nach Anspruch 7, **dadurch gekennzeichnet, dass** es ein Videoüberwachungssystem in einem geschlossenen Kreis umfasst, um eine Überwachung der Gesamtheit der SCi-Bereiche zu ermöglichen, wobei die vom Videoüberwachungssystem produzierten Bilder auf den gesicherten Servern des Videoüberwachungssystems gespeichert und in Echtzeit an eine Sicherheitsleitstelle (LS) des gesicherten Terminals (1) mit gesichertem und kontrolliertem Zugriff übertragen werden, wobei die an die LS übertragenen Bilder mit einer automatischen Maskierung der Gesichter, außer denen der Mitarbeiter des gesicherten Terminals (1), versehen sind.

9. Gesichertes Terminal (1) nach Anspruch 8, **dadurch gekennzeichnet, dass** das Videoüberwachungssystem feste Kameras und Panoramakameras umfasst, wobei die Kameras hochauflösende Kameras sind und das Internetprotokoll verwenden, um Bilder und Steuersignale verschlüsselt über ein dediziertes internes Kommunikationsnetzwerk aus Glasfaser oder dergleichen an Videoserver zu übertragen.

10. Gesichertes Terminal (1) nach einem der Ansprüche 8 oder 9, **dadurch gekennzeichnet, dass** das Videoüberwachungssystem über ein Bewegungsdetektions- und Gesichtserkennungssystem und ein Netzwerk von Wärmekameras verfügt.

11. Gesichertes Terminal (1) nach einem der Ansprüche 7 bis 10, **dadurch gekennzeichnet, dass** es im Bereich des Übergangs von einem SCi-Bereich zu einem anderen parametrierbare Durchgangsabschirmungen und mehrere Röntgenscanner umfasst, die mindestens wie folgt verwendet werden:
- ein Scanner, der dem Gepäck beim Start vorbehalten ist und im Bereich der Abschirmung für die eintreffenden Fahrzeuge aufgestellt ist;
- ein Scanner, der den Ordnungskräften im Bereich des Hauptzugangs zu den Flugzeugen (6) sowohl für die Starts als auch die Landungen zur Verfügung steht;
- ein Scanner, der dem Handgepäck vorbehalten ist und im Bereich der Abschirmung für die eintreffenden Fußgänger aufgestellt ist;
- ein Scanner, der den Waren, sowohl für die Passagiere als auch für das Terminal, vorbehalten ist;
- ein Scanner mit Metalldetektor-Portal, der dem Personaleingang vorbehalten ist.

12. Gesichertes Terminal (1) nach einem der Ansprüche 1 bis 11, **dadurch gekennzeichnet, dass** es ein Container-Verwaltungssystem umfasst, das es ermöglicht, die Waren und/oder das Gepäck in gesicherten Containern zu befördern, um die Unversehrtheit ihres Inhalts von ihrem Startpunkt bis zu ihrem Landepunkt zu gewährleisten, wobei diese gesicherten Container über ein elektronisches Schloss verfügen, das auf Basis von mindestens sechsstelligen Codes funktioniert, die am Tastenfeld des oder der Container(s) eingegeben werden müssen, wobei jedem Flug eines Flugzeugs (6) ein eindeutiger Schließcode und ein eindeutiger Öffnungscode zugeordnet sind, sodass ein Container, sobald er verschlossen wurde, nicht mehr geöffnet werden kann, und sobald er geöffnet wurde, nicht mehr verschlossen werden kann, außer auf ausdrückliches Verlangen der Behörden.

13. Gesichertes Terminal (1) nach einem der Ansprüche 1 bis 12, **dadurch gekennzeichnet, dass** es so ausgelegt ist, dass es die Sicherheit in Verbindung mit seinem Personal gewährleistet, wobei Letztere über mindestens die folgenden Ausrüstungen und Verfahren sichergestellt wird:
- ein spezielles Einstellungsverfahren;
- eine Zugangsschleuse für den Personaleingang mit systematischem Durchgang durch Sicherheitsportale;
- eine biometrische Authentifizierung für die Zutrittskontrolle zu den Arbeitsräumen;
- eine Beschränkung der persönlichen Gegenstände, die sich in den Bereichen innerhalb des gesicherten Terminals (1) befinden dürfen;
- eine Beschränkung der Mittel zur Kommunikation mit der Außenwelt;
- ein eindeutiger gesicherter und personalisierter Ausweis für jeden Mitarbeiter, der für jede Bewegung im gesicherten Terminal (1) erforderlich ist.

14. Gesichertes Terminal (1) nach Anspruch 13, **dadurch gekennzeichnet, dass** der Ausweis durch das Einstecken einer eindeutigen gesicherten und personalisierten Chipkarte und die Eingabe seines persönlichen Identifikationscodes durch den Mitarbeiter aktiviert wird, wobei die Chipkarte nur in Anwesenheit des Personalleiters und des Sicherheitsleiters des gesicherten Terminals (1) programmiert werden kann und mindestens die folgenden verschlüsselten Daten enthält:
- die digitalisierten Bilder des Gesichts des Mitarbeiters (in Farbe, Schwarz-Weiß und Infrarot);
- die Fingerabdrücke der Finger der zwei Hände;
- den Venenabdruck der zwei Hände;
- die standardüblichen Identitätsinformationen des Mitarbeiters: mindestens Name, Vorname, Position, Dauer des Arbeitsvertrags.

15. Gesichertes Terminal (1) nach einem der Ansprüche 1 bis 14, **dadurch gekennzeichnet, dass** es, um die Sicherheit der Flugzeuge (6) ab dem Zeitpunkt sicherzustellen, ab dem sie sich auf dem Vorfeld (7) befinden, berührungsfreie Sicherheitsmittel umfasst, die keine Ausrüstung im Inneren des oder am Flugzeug (6) erfordern, wobei diese Sicherheitsmittel mindestens eine Videoüberwachungsvorrichtung, eine Perimeterdetektionsvorrichtung und die Kontrolle der hauptsächlich in den Hangars (5) und auf dem Vorfeld (7) verwendeten Geräte umfasst.

## Claims

1. Secure terminal (1) for air transport of passengers, the technical and operational infrastructure of which makes it possible to ensure the physical security of the building, aircraft, goods, passengers and the flying, technical and administrative personnel and confidentiality of the passengers and of their goods, said secure terminal (1) including at least one building (2) having a roughly V-shaped horizontal section and including two wings (3) extending from a middle zone (4), constituting parking hangars (5) for aircraft (6) and determining between them a non-covered central zone (7), referred to as a "ramp", arranged to allow the handling and parking of aircraft (6), the ramp (7) being physically isolated from the external environment of the secure terminal (1) by a barrier (8), called "shield", joining the free ends of the wings (3) and then transforming the assembly consisting of building (2) and ramp (7) into a secure enclosure, the shield (8) also helping to preserve the confidentiality of the boarding and disembarking movements and of the loading and unloading of the aircraft parked on the ramp (7).

2. Secure terminal (1) according to claim 1, **characterised in that** the portion of the ramp (7) disposed in the immediate vicinity of the middle zone (4) is covered and constitutes the boarding zone (9) able to accommodate at least one aircraft (6) and allowing the boarding/disembarkation of passengers, crews and customers and the loading/unloading of goods and consignments sheltered from bad weather or the sun and especially sheltered from indiscreet outside gazes.

3. Secure terminal (1) according to claim 2, **characterised in that** said portion of the ramp (7) includes a rotary platform (71) able to accommodate an aircraft (6) and to pivot it approximately 180 degrees in order to position the cockpit in the direction of the shield (8), and **in that** the internal facade (91) of the boarding zone (9) is reinforced in order to withstand the mechanical and thermal stresses caused by the thrust of said engines of an aircraft (6).

4. Secure terminal (1) according to any one of claims 1 to 3, **characterised in that** it includes an autonomous or semi-autonomous de-icing device (10) allowing de-icing and the application of anti-icing products on the aircraft (6) situated on the ramp (7) in order to make them operational for a new departure, said de-icing device (10) being able to be controlled directly by an operator on the ground or directly by the captain on board the aircraft (6) concerned.

5. Secure terminal (1) according to claim 4, **characterised in that** the de-icing device (10) is a stabilised suspended system composed of a distribution tank (11) provided with one or more nozzles, able to move along a cable (12) tensioned between the wings (3) of the building (2) of the secure terminal (1), said assembly consisting of distribution tank (11) and cable (12) being able to move, in a direction substantially perpendicular to said cable (12), by means of two winch crabs (13) each able to move along the top edge of one of the internal facades of the wings (3) of the building (2).

6. Secure terminal (1) according to claim 5, **characterised in that** the distribution tank (11) is able to move vertically with respect to the cable (12) by means of an extensible device (15).

7. Secure terminal (1) according to any one of claims 1 to 6, **characterised in that**, in order to ensure security, it is organised into zones of different safety levels, these being at least the following:
- HC ZONE: zones relating to the locations outside the control of the secure terminal (1),
- Sci ZONES: zones relating to the locations external and/or internal to the secure terminal (1) under the control of said secure terminal (1),
- FO ZONE: zones relating to the locations reserved for the police and not accessible to passengers,
when passing from one zone to another, specific security rules will apply according to the entity passing, said security rules being implemented by various means and equipment.

8. Secure terminal (1) according to claim 7, **characterised in that** it includes a closed-circuit video surveillance system for allowing surveillance of all the Sci zones, the images produced by said video surveillance system being stored on secure servers of said video surveillance system and transmitted in real time to a security command station (CS) of the secure terminal (1) with secure controlled access, said images transmitted to the CS being with automatic masking of the faces other than those of employees of the secure terminal (1).

9. Secure terminal (1) according to claim 8, **characterised in that** said video surveillance system comprises fixed cameras and panoramic cameras, said cameras being high-definition cameras using the Internet Protocol for transmitting images and command signals in an encrypted manner to video servers through a dedicated fibre optic or similar internal communication network.

10. Secure terminal (1) according to either one of claims 8 or 9, **characterised in that** the video surveillance system has a movement-detection and facial-recognition system and a network of thermal cameras.

11. Secure terminal (1) according to any one of claims 7 to 10, **characterised in that** it includes parameterisable transit shields at the passage from one SCi zone to another, and a plurality of X-ray scanners used at least in the following manner:
- a scanner dedicated to departure baggage and placed at the vehicle-arrival shield;
- a scanner made available to the police at the main access to the aircraft (6), whether for arrivals or departures;
- a scanner dedicated to hand baggage and placed at the pedestrian-arrival shield;
- a scanner dedicated to goods both for passengers and for the terminal;
- a scanner dedicated to the personnel entrance with metal-detector gate.

12. Secure terminal (1) according to any one of claims 1 to 11, **characterised in that** it includes a container-management system making it possible to convey goods and/or baggage in secure containers, in order to guarantee integrity of the content thereof from the point of departure thereof to the point of arrival thereof, these secure containers having an electronic lock functioning on the basis of codes with at least six digits that have to be entered on the keypad of the container or containers, a unique closure code and opening code being associated with each flight of an aircraft 6 so that, once a container is closed, it can no longer be opened and, once opened, it can no longer be closed, except at the express request of the authorities.

13. Secure terminal (1) according to any one of claims 1 to 12, **characterised in that** it is configured so as to guarantee security relating to its personnel, this being ensured by at least the following equipment and procedures:
- a specific recruitment procedure;
- an access lobby for the entry of the personnel with systematic passage through the security gates;
- biometric authentication for controlling accesses to the working spaces;
- limitation to the personal objects that can be present in the zones internal to the secure terminal (1) ;
- limitation of the means of communication with the outside;
- unique secure personalised badge for each employee necessary for any movement in the secure terminal (1).

14. Secure terminal (1) according to claim 13, **characterised in that** said badge is activated by the insertion of a unique secure personalised chip card and the entry by the employee of his personal identification code, said chip card being able to be programmed only in the presence of the human resources manager and the security manager of the secure terminal (1) and containing at least the following encrypted data:
- digitised images of the face (in colour, in black and white and in infrared) of the employee;
- fingerprints of the fingers of both hands;
- vein print of both hands;
- standard identity information on the employee; surname, first name, job, duration of contract of employment at least.

15. Secure terminal (1) according to any one of claims 1 to 14, **characterised in that**, in order to ensure security of the aircraft (6) as from the moment when they are on the ramp (7), it includes non-intrusive security means not requiring any equipment inside or on the aircraft (6), these security means including at least one video surveillance device, a perimeter detection device and monitoring of the apparatus used mainly in the hangars (5) and on the ramp (7).
